(19) **Europäisches Patentamt**

**European Patent Office**

**Office européen des brevets**

(11) **EP 0 801 302 B1**

(12) **EUROPÄISCHE PATENTSCHRIFT**

(45) Veröffentlichungstag und Bekanntmachung des Hinweises auf die Patenterteilung:
**27.07.2005 Patentblatt 2005/30**

(51) Int Cl.⁷: **G01N 27/22**

(21) Anmeldenummer: **97890046.2**

(22) Anmeldetag: **12.03.1997**

(54) **Verfahren zum Ermitteln der absoluten Luftfeuchtigkeit**

Method for measuring the absolute humidity of air

Méthode pour déterminer l'humidité absolue de l'air

(84) Benannte Vertragsstaaten:
**AT DE FI FR GB**

(30) Priorität: **10.04.1996 AT 20296**

(43) Veröffentlichungstag der Anmeldung:
**15.10.1997 Patentblatt 1997/42**

(73) Patentinhaber: **E + E ELEKTRONIK GESELLSCHAFT M.B.H.**
**A-4210 Engerwitzdorf (AT)**

(72) Erfinder: **Mitter, Helmut, Dr.**
**4202 Hellmansödt (AT)**

(74) Vertreter: **Hofmann, Ernst**
**Dr. Johannes Heidenhain GmbH,**
**Patentabteilung,**
**Postfach 12 60**
**83292 Traunreut (DE)**

(56) Entgegenhaltungen:
**DE-A- 2 851 686      DE-A- 3 911 812**
**US-A- 4 482 882**

## Beschreibung

Die Erfindung bezieht sich auf ein Verfahren zum Ermitteln der absoluten Luftfeuchtigkeit mit einem kapazitiven Sensor und einem Temperatursensor sowie einem Heizelement, wobei die Sensortemperatur bei Erreichen eines vorbestimmten Feuchtigkeitsgrenzwertes verändert wird.

Die absolute Feuchte eines Gases bzw. von Luft kann am einfachsten über die Messung der Taupunkttemperatur $T_d$ bestimmt werden. Die Taupunkttemperatur ist jene Temperatur, auf die ein feuchtes Gas abgekühlt werden muß, damit eine Auskondensation von Wasser beginnt. Zwischen der Taupunkttemperatur und der absoluten Feuchte gibt es entsprechend der Dampfdruckkurve von Wasser einen direkten Zusammenhang, der in der Literatur mittels Funktionen verschiedenen Genauigkeitsgrades beschrieben wird (z.B.: Sonntag [1] (Formeln verschiedener Genauigkeitsgrade zur Berechnung des Sättigungsdampfdruckes über Wasser und über Eis und ihre Anwendung auf einige praktische Feuchtemeßaufgaben; Abhandlungen des Meteorologischen Dienstes der DDR, Akad.Verl. 1982), Sonntag [2] (Important New Values of the Physical Constants of 1986, Vapour Pressure Formulations based on the ITS-90 and Psychrometer Formulae; Z. Meteorol. 70 (1990) 5, p. 340-344). Die am häufigsten verwendete Funktion ist die Magnus-Formel die eine direkte Beziehung zwischen Taupunkttemperatur $T_d[°C]$ und dem Wasserdampfpartialdruck $e[hPa]$ liefert.

$$e = e_w(T_d) = A.\exp\left(\frac{m.T_d}{T_n+T_d}\right) \quad (1)$$

$$\text{Magnus-Formel}$$

$$T_d(e) = T_n \cdot \frac{\ln\frac{e}{A}}{m - \ln\frac{e}{A}} \quad (2)$$

Mit :

$A = 6.112 \qquad m = 17.62 \qquad T_n = 243.12$ (gültig für ITS 90/ Sonntag [2])

Bei einem wesentlich höheren Druck als Atmosphärendruck (1013.25 hPa) müssen noch Korrekturen (Hyland [3] (A Correlation for the Second Interaction Virial Coefficients and Enhancement Factors for Moist air; J. Research NBS, A. Physics and Chemistry 79A (1975), p. 551-560), Sonntag [2]) berücksichtigt werden, die jedoch am prinzipiellen Verhalten nichts ändern.

Aus den Funktionen für die absolute Feuchte ergibt sich ein bekanntes Faktum:

Solange man oberhalb der Taupunkttemperatur bleibt, ändert sich bei einer Variation der Gastemperatur die absolute Feuchte nicht. Sehr wohl ändert sich jedoch die relative Luftfeuchte $F[\%r.F.]$, die gegeben ist durch das Verhältnis Wasserdampfpartialdruck $e$ bei der Taupunkttemperatur $T_d$ zum Sättigungspartialdruck über Wasser $e_w$ bei der Gastemperatur $T$ (Sonntag[1]):

$$F = \frac{e(T_d)}{e_{w(T)}} \quad (3)$$

Durch Variation der Gastemperatur $T$ kann man bei einer gegebenen Taupunkttemperatur $T_d$ jede beliebige relative Luftfeuchte $F$ einstellen Im speziellen ergibt sich bei $T = T_d$ eine relative Luftfeuchte von 100%

Dieses grundsätzliche Verhalten von feuchter Luft wird z.B. beim Taupunktspiegel zur Bestimmung der Taupunkttemperatur ausgenutzt, indem das zu messende Gas über eine Spiegelfläche geleitet wird, die solange abgekühlt wird, bis erstmalig Betauung auftritt. Die Betauung wird über die Änderung der Reflexion des Spiegels bestimmt und die entsprechende Temperatur als Taupunktstemperatur direkt gemessen. Andere Systeme nutzen das gleiche Prinzip und detektieren die Betauung z.B. mittels akustischer Oberflächewellen oder durch eine Kapazitätsänderung an der Oberfläche.

Dieses Verfahren ist zwar vom Prinzip her sehr genau, hat aber trotzdem einige Nachteile. Einerseits ist der apparative Aufwand recht hoch, was zu teuren Systemen führt, andererseits besteht die Gefahr der Spiegelverschmutzung, was zu erhöhten Meßfehlern oder zu instabilen Meßergebnissen führt. Diese Probleme können zwar mit einer Reihe von Maßnahmen teilweise gelöst werden, was allerdings zu einer weiteren Verteuerung des Systems führt. Zumindest bleibt aber die Notwendigkeit von relativ kurzen Serviceintervallen, was zu erhöhten Betriebskosten führt.

Eine andere Möglichkeit zur Bestimmung der absoluten Luftfeuchte besteht in der Messung der relativen Luftfeuchte und der Lufttemperatur und der Berechnung der Taupunkttemperatur und äquivalenter Größen mit Hilfe z. B. der Magnusformel und ihrer Umkehrfunktionen.

Sättigungsdampfdruck $e_w$ bei T : $e_w = e_w(T)$

Wasserdampfpartialdruck e bei T und relativer Feuchte F: $e = e_w * F$

Taupunkttemperatur $T_d$: $T_d = T_d(e)$

Kapazitive Feuchtesensoren sind in verschiedenen Ausführungsformen am Markt erhältlich. Kapazitive Feuchtesensoren in Dünnschichttechnik zeichnen sich durch praktisch lineares Kapazitäts - Feuchte Verhalten und weitestgehend konstante Empfindlichkeit im Meßbreich auf.

Dieses indirekte Verfahren zur Bestimmung der absoluten Luftfeuchte weist als Vorteile gegenüber dem direkten Verfahren mit einem Taupunktspiegel kürzere Ansprechzeiten, geringere Verschmutzungsempfindlichkeit und die Einsatzmöglichkeit auch bei hohen Temperaturen auf.

Nachteile sind vor allem bei einem Betrieb bei hoher relativer Feuchte, d.h. bei Betrieb bei einer Gastemperatur in der Nähe (einige 0,1 bis 1°C) der Taupunkttemperatur zu erwarten.

In diesem Temperaturbereich besteht die Gefahr der Betauung des kapazitiven Sensors, was zu verfälschten Meßsignalen und bis zum Auftrocknen des Sensors zu einer Totzeit, während der keine sinnvolle Messung zu erwarten ist, führt.

Bei längerem Betrieb im Hochfeuchtebereich F > 95% kann der Effekt der Aufsättigung des Sensors auftreten, was sich in einer Drift des Sensorsignals äußert und ebenfalls zu stark verfälschten Meßergebnissen führt.

Aus der DE 19 513 274 A1 ist bereits ein Verfahren zur Messung des Taupunktes oder einer Gaskonzentration bekannt geworden, bei welcher ein indirektes Meßverfahren gewählt wird. Durch äußeres Abkühlen des Sensors soll gemäß diesem Verfahren eine Verschiebung des Meßbereiches des Sensors erreicht werden, sodaß insbesondere bei niedrigen Werten der relativen Feuchtigkeit eine hohe relative Feuchtigkeit nach dem Abkühlen gemessen wird, worauf im Bereich des Taupunktes der Meßbereich jeweils so verschoben wird, daß eine möglichst hohe Meßgenauigkeit erzielt wird. Die bekannte Verfahrensweise erfordert zwei getrennte Sensoreinheiten, von denen die erste Sensoreinheit einen Feuchtigkeitssensor und einen Temperatursensor enthält, während die zweite Einheit, die am tatsächlichen Meßpunkt angeordnet ist, lediglich einen Temperatursensor enthält. Die erste Sensoreinheit wird auf eine Temperatur oberhalb der Umgebungstemperatur aufgeheizt, um das Befeuchten des Feuchtigkeitssensors durch Kondensation zu verhindern. Insgesamt wird die Arbeitstemperatur des Feuchtigkeitssensors im besonderen unter Verwendung von Pelletier-Elementen in den optimalen Bereich der Sensortemperatur verschoben, wobei der Taupunkt der Umgebung aus dem Meßergebnis der relativen Feuchtigkeit des Feuchtigkeitssensors und der gemessenen Temperatur des Feuchtigkeitssenors bestimmt wird.

Desweiteren ist aus der DE 39 11 812 A1 ein Feuchtesensor bekannt, der eine gesputterte Polymer-Sensorschicht aufweist. Der Sensor umfaßt eine integrierte Heizung zum Ausheizen, die die bei hohen Luftfeuchtigkeiten auftretenden, oben angesprochenen negativen Effekte kompensieren soll. Details bezüglich der Funktionsweise der Heizung finden sich in dieser Druckschrift jedoch nicht.

Aus der Druckschrift DE 2851686 A1 ist ein weiteres Verfahren zum Ermitteln der absoluten Luftfeuchtigkeit bekannt. Die vorgeschlagene Messvariante nutzt einen kapazitiven Sensor, einen Temperatursensor sowie ein separates Heizelement, wobei die Sensortemperatur bei Erreichen eines vorbestimmten Feuchtigkeitsgrenzwertes gezielt verändert wird. Es resultiert demzufolge ein gewisser Aufwand aufgrund der Heizung und Messung über zwei separate Elemente.

Die Erfindung zielt nun darauf ab, ein Verfahren der eingangs genannten Art für einen kapazitiven Feuchtesensor zu schaffen, bei welchem zum einen die Gefahr einer Verfälschung der Messergebnisse bei längerem Betrieb im Hochfeuchtebereich und die Gefahr einer Drift des Sensorsignals eliminiert werden kann. Zum anderen zielt das erfindungsgemäß Verfahren insbesondere darauf ab, auch an der Grenze zur Betauung langzeitstabil und genau die absolute Feuchtigkeit messen zu können, so dass in der Folge auch die relative Feuchte an der Grenze zu 100% relativer Feuchtigkeit langzeitstabil genau gemessen werden kann.

Zur Lösung dieser Aufgabe besteht die erfindungsgemäße Verfahrensweise im wesentlichen darin, dass die Bestimmung der Luftfeuchtigkeit bis zum Erreichen des vorbestimmten Feuchtigkeitsgrenzwertes durch Auswertung des Messwertes für die Kapazität des Sensors vorgenommen wird und dass bei Erreichen des vorbestimmten Grenzwertes die Temperatur des Sensors auf konstante Kapazität des Sensors durch Heizen geregelt und ausgewertet wird. Dadurch, dass das Messprinzip bei Erreichen eines definierten vorbestimmten Feuchtigkeitsgrenzwertes geändert wird, kann jeweils im optimalen Bereich gearbeitet werden, ohne dass hierfür ein Kühlen des Sensors erforderlich wäre. Vielmehr ist es im Rahmen des erfindungsgemäßen Verfahrens ausreichend, wenn bei Überschreiten eines vorbestimmten Feuchtigkeitsgrenzwertes lediglich eine Aufheizung des Sensors erfolgt. Die Regelung des Heizvorganges gestaltet sich dabei überaus einfach, da erfindungsgemäß die Heizung so eingestellt wird, dass der kapazitive Sensor seine konstante Kapazität behält. Im Einzelnen wird somit die kombinierte Temperatur - Feuchte Sensor je nach Feuchtebereich in zwei verschiedenen Betriebsarten betrieben:

a) Die relative Feuchte liegt unterhalb einer festgelegten Grenzfeuchte (z.B. Fg = 75%r.F.):

Mit dem kapazitiven Feuchtesensor wird in üblicher Weise relative Feuchte, mit dem Temperatursensor die Umgebungstemperatur gemessen. Aus diesen Meßgrößen errechnet sich mit Hilfe z.B. der Magnusformel die Taupunkttemperatur und aquivalente Größen.

b) Die relative Feuchte liegt oberhalb der Grenzfeuchte $F_g$:

Der Temperatursensor wird nun mit einem so hohen Strom betrieben, daß sich das Substrat und gemeinsam mit ihm der kapazitive Feuchtesensor aufgrund der Verlustwärme auf eine Temperatur $T_ü > T$ erwärmt. Die Heizleistung des Temperatursensors wird mit einer geeigneten Schaltung so geregelt, daß der kapazitive Feuchtesensor eine konstante relative Feuchte von Fg sieht. Der Betriebsstrom des Temperatursensors wird daher auf konstante Sensorkapazität geregelt. Über den Spannungsabfall am Temperatursensor ergibt sich mit dem Betriebsstrom die Sensortemperatur und daraus mit der eingestellten konstanten Sensorkapazität die zu messende absolute Feuchte bzw. Taupunkttemperatur.

Bei einer Temperatur Tü und einer Grenzfeuchte Fg ergibt sich unter Verwendung der Magnusformeln:

$$e = e_w(T_ü) \cdot F_g \qquad (4)$$
$$T_d \approx T_d(e)$$

Der Vorteil der vorgeschlagenen Anordnung besteht in einem kostengünstig herzustellenden Sensorelement, das bei geeignetem Betrieb die Vorteile einer indirekten Taupunktmessung aufweist und gleichzeitig die Nachteile beim Hochfeuchtebetrieb gesichert vermeidet.

In besonders vorteilhafter Weise kann hierbei das Verfahren so geführt werden, daß der Temperatursensor als resistiver Sensor ausgebildet ist und durch Stromeinspeisung als Heizelement verwendet wird und daß der Spannungsabfall am resistiven Sensor für die Temperaturmessung herangezogen wird, wodurch der bauliche Aufwand des Temperatur-Feuchteelementes wesentlich verringert wird.

Um ein Betauen des Sensors mit Sicherheit zu vermeiden, muß der Feuchtigkeitsgrenzwert entsprechend vorgegeben werden. Mit Vorteil wird das erfindungsgemäße Verfahren hierbei so durchgeführt, daß der Feuchtigkeitsgrenzwert zwischen 40 % rel. Feuchtigkeit und 90 % rel. Feuchtigkeit, vorzugsweise bei 75 % rel. Feuchtigkeit, gewählt wird.

Eine langzeitstabile Messung mit einem kostengünstig herzustellenden Sensor kann dadurch sichergestellt werden, daß die Sensoren auf einem Träger aus thermisch leitenden und elektrisch isolierenden Material, wie z.B. $Al_2O_3$, AlN, $Be_2O_3$, Glas oder Si, angeordnet sind, wodurch auch die mechanische Stabilität und insbesondere die Temperaturfestigkeit beim Aufheizvorgang gewährleistet ist.

Mit Vorteil kann die Ausbildung hierbei so getroffen sein, daß die Dicke des Trägermaterials zwischen von 0,05 mm bis 1 mm gewählt wird, wodurch kurze Ansprechzeiten gewährleistet sind. Um eine möglichst rasche Aufheizung des kapazitiven Sensors bei Erreichen des Feuchtigkeitsgrenzwertes sicherzustellen, ist mit Vorteil die Ausbildung so getroffen, daß der resistive Sensor unterhalb des außenliegenden kapazitiven Sensors angeordnet wird.

Für die langzeitstabile Bestimmung der relativen Feuchte im Hochfeuchtebereich kann mit Vorteil die Verfahrensweise so durchgeführt werden, daß ein weiterer Temperatursensor für die Bestimmung der Gastemperatur zur Ermittlung der relativen Feuchte eingesetzt wird.

Mit einem derartigen zusätzlichen Temperaturfühler kann unter Berücksichtigung der gemessenen Gastemperatur die relative Feuchte unter Anwendung der eingangs genannten Rechenformel langzeitstabil auch oberhalb der Grenzfeuchte Fg ermittelt werden.

Die Erfindung wird nachfolgend anhand eines in den Zeichnungen schematisch dargestellten Ausführungsbeispieles näher erläutert. In diesen zeigen Fig. 1 einen kapazitiven Feuchtesensor mit einem Temperaturfühler, Fig. 2 eine elektronische Schaltungsanordnung zur Messung der absoluten Luftfeuchte und Fig. 3 eine elektronische Schaltungsanordnung zur Messung der relativen Luftfeuchte. Fig. 4 und 5 erläutern die verschiedenen Betriebsarten zur Messung der Luftfeuchte in verschiedenen Feuchtebereichen.

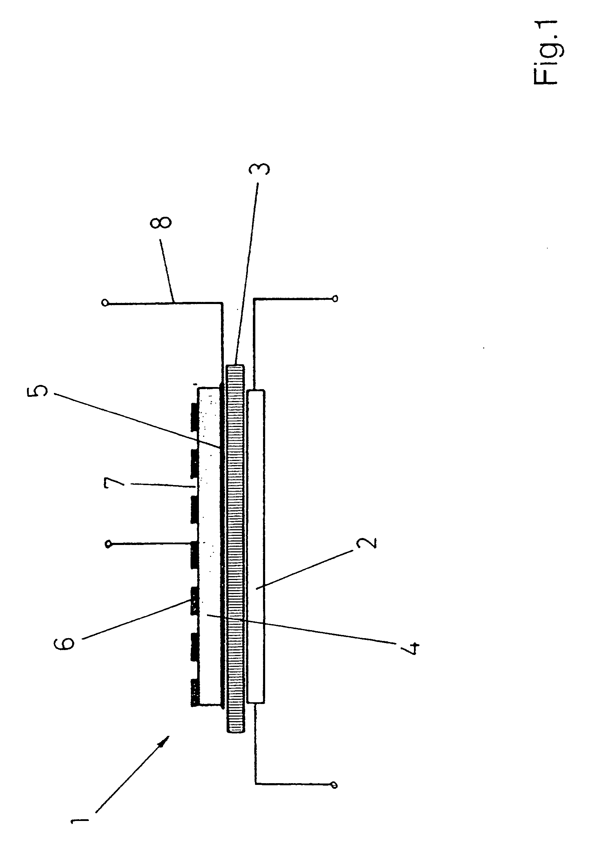

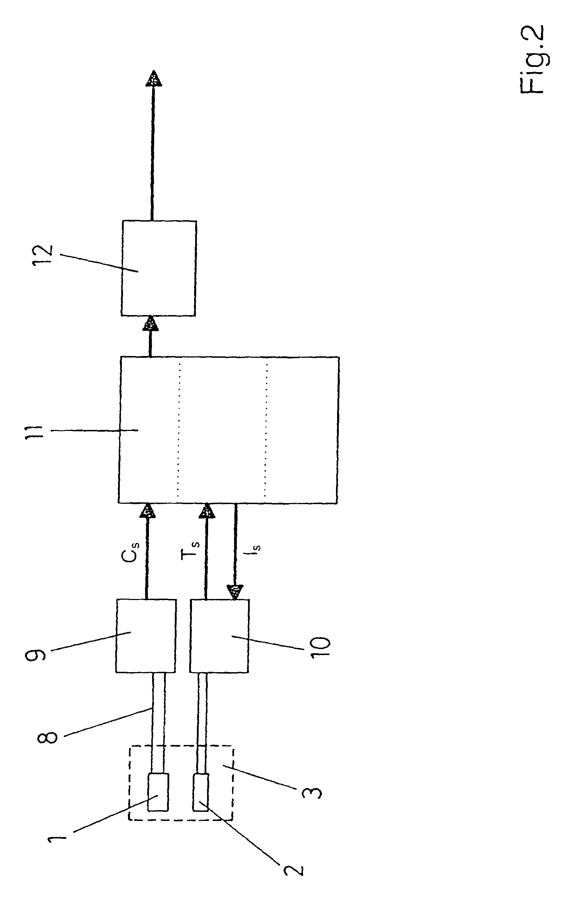

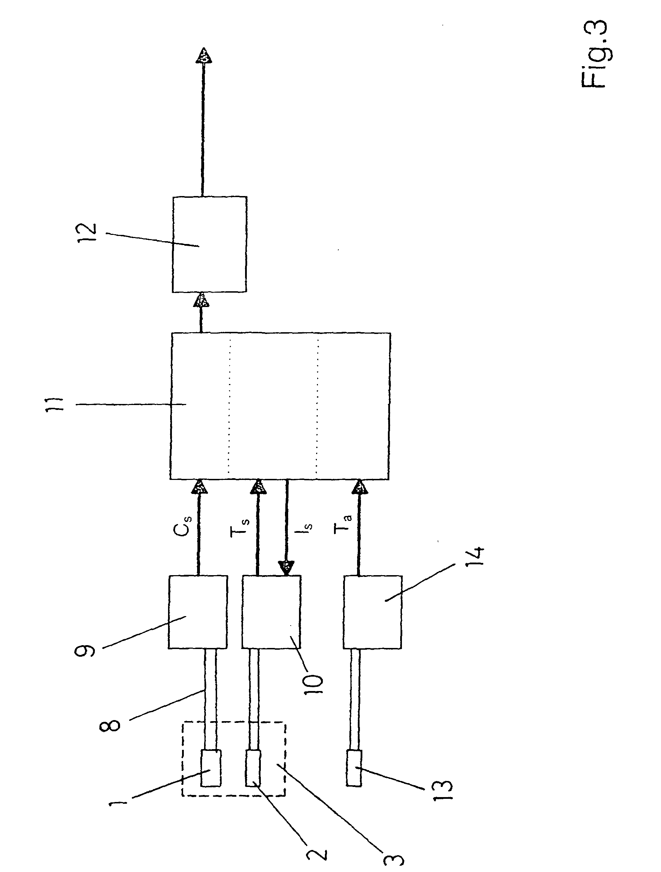

In Fig. 1 ist ein kapazitiver Feuchtesensor 1 und ein resistiver Temperaturfühler 2 auf einem thermisch leitenden und elektrisch isolierenden Tragekörper 3 aufgebracht. Der kapazitive Feuchtesensor 1 besteht aus einem feuchtigkeitsaufnehmenden Dielektrikum 4 und zwei Elektroden 5 und 6, wobei die dem Tragekörper 3 abgewandte Elektrode 6 mit Durchbrechungen 7 versehen ist, um einen Eintritt der Luft in das Dielektrikum 4 zu ermöglichen. Der Feuchtesensor 1 und der Temperaturfühler 2 sind durch Leitungen 8 mit der in Fig. 2 näher dargestellten Auswerteelektronik verbunden. Wie in Fig. 2 ersichtlich, gelangen die Ausgangssignale des Feuchtesensors 1 und des Temperaturfühlers 2 an die Sensorschnittstellen 9 und 10 und werden dort in zur Sensorkapazität $C_s$ und zur Sensortemperatur $T_s$ proportionale Meßgrößen umgewandelt, welche wiederum Eingangssignale eines Steuergerätes 11 sind. Die Sensortemperatur $T_s$ wird dabei über den Spannungsabfall am Temperatursensor 2 bestimmt, wobei dieser bei einem hinreichend geringen Sensorbetriebsstrom $I_s$ nur als Temperatursensor arbeitet und sich nicht erwärmt. Aus der Sensorkapazität $C_s$ und der Sensortemperatur $T_s$ errechnet die Auswerteelektronik des Steuergerätes 11 einen Meßwert der relativen Feuchte. Ein diesem Meßwert proportionaler Strom gelangt an eine Ausgangssignalschnittstelle 12. Die relative Feuchte wird bis zu einem voreinstellbaren Grenzwert von z.B. 75 % bei konstanter Temperatur gemessen. Steigt die relative Feuchte über diesen Wert, wird durch die Steuerelektronik der Betriebsstrom $I_s$ des Temperatursensors erhöht und der Temperaturfühler auf eine Temperatur $T_s$, welche größer ist als die Umgebungstemperatur $T_a$, beheizt. Es kann dadurch auch im Hochfeuchtebereich die absolute Feuchte genau bestimmt werden, da eine Kondensation von Wasser im Feuchtesensor auch in der Nähe des Taupunktes durch die Erhöhung der Sensortemperatur $T_s$ vermieden werden kann. Bei der in Fig. 3 gezeigten Anordnung ist ein zusätzlicher Temperaturfühler 13 über eine Sensorschnittstelle 14 mit dem Steuergerät 11 verbunden. Durch diesen Temperatursensor 13 ist es möglich die Umgebungstemperatur $T_a$ auch im Hochfeuchtebereich zu messen, in welchem die Sensortemperatur $T_s$ wegen der Beheizung des Temperatursensors 2 größer als die Umgebungstemperatur $T_a$ ist. Es kann somit durch die gleichzeitige Messung der Umgebungstemperatur $T_a$ der Sensortemperatur $T_s$ und der Sensorkapazität $C_s$ die relative Feuchte auch im Hochfeuchtebereich bestimmt werden.

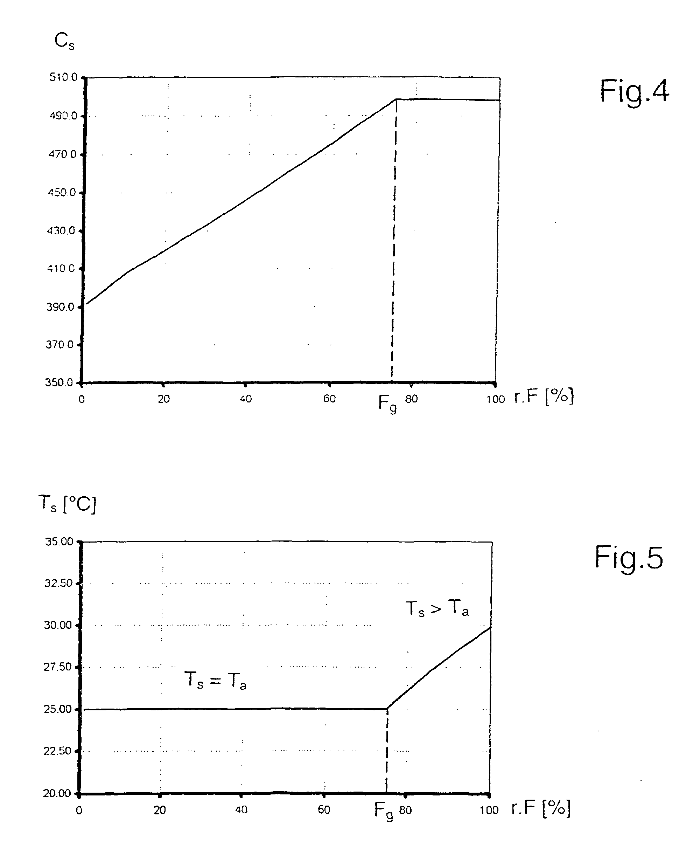

Fig. 4 und 5 veranschaulichen die verschiedenen Betriebsarten des Feuchtesensors. Die relative Feuchte (r. F.) ist in Fig. 4 gegen die Sensorkapazität $C_s$ und in Fig. 5 gegen die Sensortemperatur $T_s$ aufgetragen. Bis zu einer relativen Feuchte von 75 % wird, wie an sich bekannt, die Kapazität des Feuchtesensors bei konstanter Temperatur $T_s = T_a$ gemessen, wobei die Sensorkapazität $C_s$ mit der relativen Feuchte (r.F.) linear ansteigt. Liegt die relative Feuchte (r.F.) oberhalb der Grenzfeuchte von 75 %, so wird der Temperatursensor nun mit einem so hohen Strom $I_s$ betrieben, daß sich das Substrat und gemeinsam mit ihm der kapazitive Feuchtesensor aufgrund der Verlustwärme auf eine Temperatur $T_s > T_a$ erwärmt. Die Heizleistung des Temperatursensors wird dabei so geregelt, daß der kapazitive Feuchtesensor eine konstante relative Feuchte also auch eine konstante Kapazität $C_s$ mißt. Über den Spannungsabfall am Temperatursensor ergibt sich mit dem Betriebsstrom $I_s$ die Sensortemperatur $T_s$ und daraus mit der eingestellten konstanten Kapazität $C_s$ die zu messende absolute Feuchte.

## Patentansprüche

1. Verfahren zum Ermitteln der absoluten Luftfeuchtigkeit mit einem kapazitiven Sensor und einem Temperatursensor sowie einem Heizelement, wobei die Sensortemperatur bei Erreichen eines vorbestimmten Feuchtigkeitsgrenzwertes verändert wird, wobei die Bestimmung der Luftfeuchtigkeit bis zum Erreichen des vorbestimmten Feuchtigkeitsgrenzwertes durch Auswertung des Meßwertes für die Kapazität des Sensors vorgenommen wird und bei Erreichen des vorbestimmten Feuchtigkeitsgrenzwertes die Temperatur des Sensors auf konstante Kapazität des Sensors durch Heizen geregelt und ausgewertet wird,
**dadurch gekennzeichnet,**
**dass** der Temperatursensor als resistiver Sensor (2) ausgebildet und durch Stromeinspeisung als Heizelement verwendet wird und dass der Spannungsabfall am resistiven Sensor (2) für die Temperaturmessung herangezogen wird.

2. Verfahren nach Anspruch 1, **dadurch gekennzeichnet, dass** der Feuchtigkeitsgrenzwert zwischen 40% relativer Feuchtigkeit und 90% relativer Feuchtigkeit, vorzugsweise bei 75% relativer Feuchtigkeit, gewählt wird.

3. Verfahren nach Anspruch 1, **dadurch gekennzeichnet, dass** die Sensoren (1, 2) auf einem Träger (3) aus thermisch leitenden und elektrisch isolierenden Material, wie z.B. $Al_2O_3$, AlN, $Be_2O_3$, Glas oder Si, angeordnet sind.

4. Verfahren nach einem der Ansprüche 1 bis 3, **dadurch gekennzeichnet, dass** die Dicke des Trägermaterials zwischen 0,05 mm bis 1 mm gewählt wird.

5. Verfahren nach einem der Ansprüche 1 bis 4, **dadurch gekennzeichnet, dass** der resistive Sensor (2) unterhalb des außenliegenden kapazitiven Sensors (1) angeordnet wird.

**6.** Verfahren nach einem der Ansprüche 1 bis 5, **dadurch gekennzeichnet, dass** ein weiterer Temperatursensor (13) für die Bestimmung der Gastemperatur zur Ermittlung der relativen Feuchte eingesetzt wird.

**Claims**

**1.** Method for determining the absolute humidity of air using a capacitive sensor and a temperature sensor as well as a heating element, the sensor temperature being altered when a predetermined humidity threshold is reached, the air humidity before the predetermined humidity threshold is reached being determined by evaluating the measured value for the capacitance of the sensor and, once the predetermined humidity threshold is reached, the sensor temperature being evaluated and regulated by heating to keep the sensor capacitance constant,
**characterised in that**
the temperature sensor is designed as a resistive sensor (2) and is used as a heating element by being fed with current, and **in that** the voltage drop at the resistive sensor (2) is used for the temperature measurement.

**2.** Method according to claim 1, **characterised in that** the humidity threshold is selected between 40% relative humidity and 90% relative humidity, preferably 75% relative humidity.

**3.** Method according to claim 1, **characterised in that** the sensors (1, 2) are arranged on a support (3) formed from thermally conductive and electrically insulating material, such as e.g. $Al_2O_3$, AlN, $Be_2O_3$, glass or Si.

**4.** Method according to one of claims 1 to 3,
**characterised in that** the thickness of the support material is selected between 0.05 mm and 1 mm.

**5.** Method according to one of claims 1 to 4,
**characterised in that** the resistive sensor (2) is arranged below the capacitive sensor (1) lying on the outside.

**6.** Method according to one of claims 1 to 5,
**characterised in that** an additional temperature sensor (13) for determining the gas temperature is used for measuring the relative humidity.

**Revendications**

**1.** Procédé pour déterminer l'humidité absolue de l'air à l'aide d'un capteur capacitif et d'un capteur de température ainsi que d'un élément chauffant, selon lequel la température du capteur est modifiée lorsqu'une valeur limite prédéterminée de l'humidité est atteinte, sachant que la détermination de l'humidité de l'air est effectuée par exploitation de la valeur de mesure pour la capacité du capteur jusqu'à ce que la valeur limite prédéterminée de l'humidité soit atteinte et, lorsque la valeur limite prédéterminée de l'humidité est atteinte, la température du capteur est réglée par chauffage à la capacité constante du capteur et est exploitée, **caractérisé en ce que** le capteur de température est réalisé sous forme de capteur résistif (2) et est utilisé en tant qu'élément chauffant par alimentation en courant et **en ce que** la chute de tension au niveau du capteur résistif (2) est utilisée pour mesurer la température.

**2.** Procédé selon la revendication 1, **caractérisé en ce que** la valeur limite de l'humidité est choisie dans la plage comprise entre 40% d'humidité relative et 90% d'humidité relative et est fixée de préférence à 75% d'humidité relative.

**3.** Procédé selon la revendication 1, **caractérisé en ce que** les capteurs (1, 2) sont disposés sur un support (3) en un matériau thermiquement conducteur et électriquement isolant, tel que $Al_2O_3$, AlN, $Be_2O_3$, le verre ou Si.

**4.** Procédé selon une des revendications 1 à 3, **caractérisé en ce que** l'épaisseur du matériau de support est choisie dans la plage comprise entre 0,05 mm et 1 mm.

**5.** Procédé selon une des revendications 1 à 4, **caractérisé en ce que** le capteur résistif (2) est disposé en dessous du capteur capacitif (1) situé à l'extérieur.

**6.** Procédé selon une des revendications 1 à 5, **caractérisé en ce que** l'on utilise un capteur de température (13) supplémentaire pour déterminer la température du gaz aux fins de mesurer l'humidité relative.

Fig.1

EP 0 801 302 B1

Fig.2

Fig.3

Fig.4

Fig.5